# EUROPÄISCHE PATENTANMELDUNG

(11) **EP 0 563 545 A1**
(43) Veröffentlichungstag der Anmeldung: **06.10.1993**
(21) Anmeldenummer: 93102030.9
(22) Anmeldetag: 10.02.1993
(51) Int. Cl.: C21D 9/30, B23P 13/04, F01L 1/04

(54) **Verfahren zur Herstellung von Nockenwellen mit umschmelzgehärteten Nocken**

(30) Priorität: 26.02.1992 DE 4205801
(71) Anmelder: AEG-Elotherm GmbH, D-42855 Remscheid (DE)
(72) Erfinder: Reinke, Friedhelm, Prof. Dr.-Ing., W-5630 Remscheid-Hasten (DE)
(74) Vertreter: Cohausz & Florack Patentanwälte

(57) **Zusammenfassung**

Die Erfindung betrifft ein Verfahren zur Herstellung von Nockenwellen mit umschmelzgehärteten Nocken. Kennzeichen der Erfindung ist, daß ein vorgewärmtes längliches Werkstück mit der Nockenquerschnittskontur entsprechender Hüllfläche in Zonen umschmelzgehärtet wird, die der Breite der Nocken entsprechen, worauf Nocken vom Werkstück abgetrennt werden, deren Umfangsfläche über ihre gesamte Breite bis zu den Kanten hin umschmelzgehärtet ist.

## Beschreibung

Die Erfindung betrifft ein Verfahren zur Herstellung von Nockenwellen mit umschmelzgehärteten Nocken.

Ein Verfahren zum Härten der Nockenlaufflächen von Nockenwellen nach dem Umschmelzhärteverfahren ist aus der DE-AS 27 03 469 bekannt. Nach diesem Verfahren wird die vorgefertigte Nockenwelle in eine drehbare Einspannvorrichtung eingelegt und beispielsweise jedem Nockenbereich ein Brenner zugeordnet. Dabei ist der radiale Hub des Brenners entsprechend der Kontur des zu härtenden Nockens gesteuert. Brenner und Nockenwelle sind in axialer Richtung derart gegeneinander verschiebbar, daß während der Rotation der Nockenwelle auf der Nockenlauffläche eine durchgehende Härtebahn entsteht.

Mit diesem Verfahren kann die Nocke jedoch nicht ohne Hilfsmittel bis extrem nahe an die Nockenkanten gehärtet werden. Hilfsmittel können beispielsweise Kühlbacken sein, die an die Kanten angelegt werden (DE-PS 32 31 774). Aber aufgrund der durch die Mehrventiltechnik schmaler werdenden Nockenbreiten besteht heute die Anforderung, daß die Nockenlauffläche in ihrer gesamten Breite hart ist. Aus praktischen und wirtschaftlichen Gründen sollen aber zusätzliche Hilfsmittel bei der Härtung vermieden werden.

Aus der DE-OS 29 39 572 ist ein Verfahren zur Herstellung von mit einer Öllochbohrung versehenen Nockenwellen aus Gußeisen bekannt. Auch bei diesem Verfahren kann die Nocke nicht ohne Hilfsmittel bis nahe an die Nockenkanten gehärtet werden.

Daher liegt der Erfindung die Aufgabe zugrunde, ein Verfahren zur Herstellung von gehärteten Nocken zu schaffen, bei dem die Nocken ohne Zuhilfenahme weiterer Hilfsmittel in ihrer gesamten Breite, also bis zu den Nockenkanten hin umschmelzgehärtet sind.

Diese Aufgabe wird durch ein Verfahren zur Herstellung von gehärteten Nocken gelöst, welches durch folgende Maßnahmen gekennzeichnet ist:
- Vorwärmen eines länglichen Werkstücks mit nockenförmiger Querschnittskontur aus Gußeisen,
- Umschmelzhärten der Randschicht des länglichen Werkstückes in der Nockenbreite entsprechenden Zonen mittels entsprechend der Nockenkontur geführter oder fokussierter Engergiequellen, insbesondere WIG-Brenner, Plasmabrenner, Laser oder Elektronenstrahl,
- Abtrennung von umschmelzgehärteten Abschnitten aus dem Werkstück, wobei die zwischen den Umschmelzzonen liegenden Übergangszonen durch den Abtrennvorgang herausgearbeitet werden derart, daß Nocken mit umschmelzgehärteten Kantenbereichen entstehen.

Bei dem erfindungsgemäßen Verfahren entstehen jeweils einzelne Nocken, die bis an ihre Kante umschmelzgehärtet sind, weil die nicht oder nur unzureichend gehärteten Übergangszonen zwischen den einzelnen gehärteten Bereichen durch das Abtrennen herausgearbeitet werden. Die in voller Breite gehärteten Nocken werden im Anschluß an das erfindungsgemäße Herstellungsverfahren gebohrt und winkelrichtig auf einer Welle befestigt, so daß auf diese Weise die (gebaute) Nockenwelle entsteht.

Es ist nach der Erfindung auch vorgesehen, daß mehrere Nockenabschnitte gleichzeitig gehärtet werden können, wenn mehrere Brenner entlang der Längsachse des länglichen Werkstücks versetzt angeordnet sind. Dabei können zwei benachbarte Härtebereiche entweder lückenlos aneinander- grenzend gehärtet werden oder aber, wenn dies die Abmessung der Brenner nicht gestattet, kann nach Ablauf der Härtung einer ersten Gruppe von Nockenabschnitten der zwischen diesen gebildete Lückenbereich gehärtet werden, nachdem Werkstück und Brenner relativ zueinander um den Lückenschritt versetzt wurden. Falls dies aus Durchsatzgründen erforderlich ist, kann die Bearbeitung der jeweiligen Gruppen auch in hintereinandergeschalteten Stationen erfolgen.

Die Trennung der einzelnen gehärteten Oberflächenbereiche erfolgt vorzugsweise durch Trennschneiden mittels einer bekannter Schneidvorrichtung.

Eine bevorzugte Ausgestaltung der Erfindung sieht vor, daß vor dem Umschmelzhärten innerhalb der der Nockenbreite entsprechenden Zonen mindestens eine radiale Bohrung vorgenommen wird, die insbesondere mit einer Anfasung versehen wird, deren äußerer Durchmesser mindestens dem 1,5-fachen Durchmesser der in der Anfasung einmündenden Bohrung entspricht. Die radiale Bohrung dient später der Schmiermittelführung. Damit beim Aufschmelzen der Oberfläche während des Härtens ein Zufließen der Bohrung verhindert wird, ist im Bereich der Bohrungsmündung durch die Anfasung eine Durchmesservergrößerung vorgesehen. Beim Umschmelzhärten fährt die Energiequelle über den Rand der Bohrung und schmilzt die Anfasung um, ohne daß dabei die Bohrung zuläuft. Da aus tribologischen Gründen eine hohe Austrittsgeschwindigkeit des Öles aus der Bohrung angestrebt wird, hat diese unter der angefasten Tiefe einen geringen Durchmesser. Bei der hier angesprochenen gebauten Nockenwelle wird aus Gründen fertigungstechnischer Vereinfachung die größere Bohrung bis in den Bereich der Zentralbohrung geführt, so daß nach dem Zusammenbau die kleine Bohrung nur im Trägerrohr einzubringen ist.

Ein Ausführungsbeispiel für das erfindungsgemäße Verfahren wird im folgenden erläutert:
Als Ausgangswerkstück dient ein länglicher gußeisener Stab mit nockenförmiger Querschnittskontur und geeigneter Randschicht. Der Stab wird zunächst in gut handhabbare Längenabschnitte getrennt, die ähnliche Abmessungen haben wie Nockenwellen. Der Stab wird nach der üblichen Vorbereitung (Säubern, Vorschleifen, Vorfräsen, Zentrieren) in einer Vorwärmstation auf eine Vorwärmtemperatur von etwa 400 ^{o}C aufgeheizt.

In der nachfolgenden Prozeßstation erfolgt die Umschmelzhärtung. Hierzu wird entweder der gesamte (360^{o}) Oberflächenbereich eines einer Nockenbreite entsprechenden Stababschnittes in üblicher Weise mit einem z.B. WIG-Brenner (oder Plasmabrenner, Elektronenstrahl, Laserstrahl) bearbeitet oder aber nur der Teilbereich der Nockenerhebung. Die Führung aus dem jeweiligen Stababschnitt zugeordneten Brenners erfolgt der Nockenkontur entsprechend durch eine mechanische oder elektronische Meisternocke.

Nach dem Umschmelzhärtevorgang wird der Stab in bekannter Weise in einem Turm abgekühlt. Anschließend wird der Stab in einzelne Abschnitte getrennt, wobei jeder Abschnitt in etwa der Nockenbreite entspricht. Die Abtrennung erfolgt dabei so, daß die Übergangszonen zwischen den umschmelzgehärteten Abschnitten herausgetrennt werden, so daß hierdurch jeweils eine Nocke entsteht, welche über ihre gesamte Breite umschmelzgehärtet ist, ohne daß ungehärtete (weiche) Kantenabschnitte verbleiben.

Die somit in voller Breite gehärteten Nocken werden anschließend aufgebohrt und in der gewünschten Winkelposition auf einer Welle befestigt, z.B. aufgeschrumpft. Anschließend wird durch die größere angefaste Schmierbohrung die kleinere Bohrung in die Hohlwelle eingebracht.

## Patentansprüche

1. Verfahren zur Herstellung von Nockenwellen mit umschmelzgehärteten Nocken,
**dadurch gekennzeichnet,** daß ein vorgewärmtes längliches Werkstück mit der Nockenquerschnittskontur entsprechender Hüllfläche in Zonen umschmelzgehärtet wird, die der Breite der Nocken entsprechen, worauf Nocken vom Werkstück abgetrennt werden, deren Umfangsfläche über ihre gesamte Breite bis zu den Kanten hin umschmelzgehärtet ist.

2. Verfahren nach Anspruch 1,
**dadurch gekennzeichnet,** daß entlang der Längsachse des Werkstücks mehrere Energiequellen versetzt angeordnet sind, mit denen mehrere jeweils einer Nockenbreite entsprechende Zonen gruppenweise gleichzeitig umschmelzgehärtet werden.

3. Verfahren nach Anspruch 2,
**dadurch gekennzeichnet,** daß mehrere Gruppen von Zonen zeitversetzt umschmelzgehärtet werden.

4. Verfahren nach Anspruch 3,
**dadurch gekennzeichnet,** daß die mehreren Energiequellen gegenüber dem länglichen Werkstück axial um die Nockenbreite oder einem Vielfachen davon verstellt werden, um jeweils Gruppen von Zonen zeitversetzt zu härten.

5. Verfahren nach einem der Ansprüche 1 bis 4,
**dadurch gekennzeichnet,** daß vor dem Umschmelzhärten mittig innerhalb der der Nockenbreite entsprechenden Zonen mindestens eine radiale Bohrung vorgenommen wird.

6. Verfahren nach Anspruch 5,
**dadurch gekennzeichnet,** daß die Bohrung mit einer Anfasung versehen wird, deren äußerer Durchmesser mindestens dem 1,5-fachen des Bohrungsdurchmessers entspricht.

7. Verfahren nach einem der Ansprüche 1 bis 6,
**dadurch gekennzeichnet,** daß die abgetrennten Nocken unter Bildung der Nockenwelle auf einen rohrförmigen Tragkörper geschoben und dort befestigt werden.

8. Verfahren nach Anspruch 7,
**dadurch gekennzeichnet,** daß nach dem Zusammenbau der Nockenwelle durch die angefaste Bohrung in den Nocken hindurch etwa koaxial eine weitere Bohrung kleineren Druchmessers radial in den rohrförmigen Tragkörper gebohrt wird.
